# EUROPÄISCHE PATENTANMELDUNG

(11) **EP 1 759 907 A1**
(43) Veröffentlichungstag der Anmeldung: **07.03.2007**
(21) Anmeldenummer: 06015896.1
(22) Anmeldetag: 31.07.2006
(51) Int. Cl.: B60K 1/00, B62D 21/04, B62D 31/00

(54) **Elektrisch betriebenes Kraftfahrzeug, insbesondere Personen- oder Kleintransportfahrzeug**

(30) Priorität: 02.09.2005 DE 102005042043
(71) Anmelder: Henne, Markus, Dr., 8200 Schaffhausen (CH)
(72) Erfinder: Henne, Markus, Dr., 8200 Schaffhausen (CH)
(74) Vertreter: Weiss, Peter

(57) **Zusammenfassung**

Bei einem elektrisch betriebenen Kraftfahrzeug, insbesondere Personen- oder Kleintransportfahrzeug mit zumindest einem elektrischen Antrieb (12), einem Fahrzeugrahmen (6) (Chassis) und einer auf den Fahrzeugrahmen (6) aufsetzbaren Karosserie (10), soll der Fahrzeugrahmen (6) aus einem Torsionsträger (1) gebildet sein, an welchen einends eine starre Vorderachse (3) und andernends eine starre Hinterachse (5) anschliesst.

## Beschreibung

Die vorliegende Erfindung betrifft ein elektrisch betriebenes Kraftfahrzeug, insbesondere Personen- oder Kleintransportfahrzeug mit zumindest einem elektrischen Antrieb, einem Fahrzeugrahmen (Chassis) und einer auf den Fahrzeugrahmen aufsetzbaren Karosserie.

Derartige elektrisch betriebenen Fahrzeuge sind in vielfältigster Form und Ausführung im Markt bekannt und erhältlich.

Nachteilig an herkömmlich elektrisch betriebenen Fahrzeugen ist, dass diese ein hohes Gewicht aufweisen, komplex aufgebaut sind hinsichtlich Fahrwerk, Karosserie und Antrieb etc. und daher zu teuer herzustellen sind.

Ferner ist nachteilig bei herkömmlichen elektrisch betriebenen Fahrzeugen, dass diese oft einem grossen Energiebedarf aufgrund des hohen Eigengewichtes unterliegen und daher auch eine beschränkte Reichweite besitzen.

Der vorliegenden Erfindung liegt die Aufgabe zugrunde ein elektrisch betriebenes Kraftfahrzeug, insbesondere Personen- oder Kleintransportfahrzeug der eingangs genannten Art zu schaffen, welches die genannten Nachteile beseitigt, und mit welchem auf einfache und kostengünstige Weise das Eigengewicht erheblich reduziert und somit eine hohe Beschleunigung erzielt werden kann. Ferner sollen die Herstellungskosten gesenkt werden können.

Zudem soll das elektrisch betriebene Fahrzeug sehr leicht sein, einem geringen Energiebedarf unterliegen und eine grosse Reichweite besitzen.

Zur Lösung dieser Aufgabe führt, dass der Fahrzeugrahmen aus einem Torsionsträger gebildet ist, an welchen einends eine starre Vorderachse und andernends eine starre Hinterachse anschliesst.

Bei der vorliegenden Erfindung hat sich als besonders vorteilhaft erwiesen, einen Fahrzeugrahmen besonders leicht auszugestalten, in dem eine starre Vorder- und eine starre Hinterachse fest mit einem Torsionsträger verbunden, insbesondere fest verschweisst oder mittels Guss- oder Blechknoten verschraubt sind.

Zum Ausgleich von Unebenheiten der Fahrbahn hat sich ferner als vorteilhaft erwiesen am Torsionsträger und/oder an den starren Vorder- und/oder Hinterachsen, eine Mehrzahl von Schwächungen, insbesondere Ausnehmungen im Bereich der Hinterachse vorzusehen, so dass Einfluss genommen werden kann auf den Torsionswiderstand des Torsionsträgers bzw. eine Verwindung oder Verdrehung des Fahrzeugrahmens. Der Torsionsträger hat ferner die Funktion eine gezielte Steifigkeit des Fahrzeuges einzustellen, der auch nur eine gezielte, gewünschte berechenbare und ggf. einstellbare Verwindung bzw. Torsion zulässt. Dabei weist der Torsionsträger federelastische Eigenschaften auf und besitzt einen torsionsfederartigen Charakter. Hierin unterscheidet sich die vorliegende Erfindung wesentlich vom Stand der Technik.

Dabei können die Schwächungen als Ausnehmungen, wie beispielsweise als längliche Schlitze, Bohrungen od. dgl. im Torsionsträger aus fahrdynamischen Gründen vorzugsweise nahe der starren Hinterachse vorgesehen sein.

Anstelle der Schwächungen bzw. Ausnehmungen oder Schlitze kann auch ein Verdrehelement eingesetzt sein, so dass eine Bewegung der starren Vorder- oder Hinterachsen um eine Torsionsträgerachse geringfügig möglich ist. Das Verdrehelement kann jedoch auch zwischen Torsionsträger und Vorder- oder Hinterachsen sitzen, um die Vorder- und/oder Hinterachsen gegenüber dem Torsionsträger in etwa senkrecht um die Torsionsträgerachse zu bewegen.

Um das Fahrzeug möglichst leicht auszugestalten und möglichst leicht und effektiv zu betreiben, schliessen jeweils endseitig der starren Hinterachse entsprechende Trägerelemente an, die der Aufnahme des zumindest einen elektrischen Antriebes und der Aufnahme der Karosserie und/oder eines Hilfsrahmens dient. Ferner können auch Sicherheitssysteme wie bspw. Sicherheitsgurte dort und auch am Torsionsträger befestigt werden. Bevorzugt wird ein Teil des Sicherheitsgurtes am Trägerelement das andere Teil des Sicherheitsgurtes am Torsionsträger festgelegt.

Eine weitere Besonderheit der vorliegenden Erfindung ist, dass der Hilfsrahmen und/oder die Karosserie fest mit der starren Hinterachse, insbesondere fest mit dem Trägerelement der starren Hinterachse verbunden ist und in einem vorderen Bereich nahe der starren Vorderachse dort verdrehbar gelagert oder verbunden ist. Durch diese Konstruktion kann auf entsprechende Federdämpfungselemente, federgedämpfte Achsschenkel etc. verzichtet werden. Ebenso kann bei der Verwendung von zwei elektrischen Antrieben sogar auf ein Differenzial verzichtet werden, da direkt über bspw. einen Riemenantrieb, insbesondere Zahnriemen, Kette od. dgl. die Elektromotoren die Hinterräder einzeln antreiben.

Dabei können auch zwei elektrisch betriebene Antriebe bzw. Elektromotoren an dem Trägerelement der starren Hinterachse oder auf dieser selbst festgelegt werden um jeweils einzeln die Hinterräder anzutreiben.

Ferner hat sich als vorteilhaft erwiesen, dass bei dieser starren Konstruktion des Fahrzeugrahmens bestehend aus Torsionsträger mit starrer Vorderachse und Hinterachse die Sitzelemente direkt oder indirekt mit dem Torsionsträger verbunden, insbesondere verbindbar sind, wobei über entsprechende Federelemente das zumindest eine Sitzelement gegenüber dem Torsionsträger und/oder gegenüber dem Hilfsrahmen federnd verbunden sind. Auch soll im Rahmen der vorliegenden Erfindung liegen, dass die zumindest eine Energiequelle federnd gegenüber dem Torsionsträger und/oder federnd gegenüber dem Hilfsrahmen gelagert ist. Bevorzugt ist die zumindest eine Energiequelle im Bereich des Sitzelementes, im Sitzelement oder unter dem Sitzelement angeordnet. Auf diese Weise lässt sich auch der Anteil der ungefederten Masse des gesamten Fahrzeuges wesentlich reduzieren.

Derartige Fahrzeuge können sehr leicht, auch unter einem Leergewicht von 250kg als Personenkraftwagen sowie auch als Kleintransportfahrzeuge bzw. Kleinstnutzfahrzeuge hergestellt werden. Diese sollen bis zu einer Geschwindigkeit von ca. 60 km/h betreibbar sein, weisen ein erheblich reduziertes Eigengewicht auf, und sind daher sehr schnell auf hohe Geschwindigkeiten oder Endgeschwindigkeiten zu beschleunigen. Der Energiebedarf dieses kleinen elektrisch betriebenen Kraftfahrzeuges ist erheblich minimiert, so dass die Betriebsdauer und Reichweite erhöht ist.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1a eine schematisch dargestellte perspektivische Ansicht auf ein Teil eines elektrisch betriebenen Kraftfahrzeuges insbesondere auf den Fahrzeugrahmen;
Figur 1b eine schematisch dargestellte perspektivische Ansicht auf ein weiteres Ausführungsbeispiel des Fahrzeugrahmens gemäss Figur 1a;
Figur 2 eine schematisch dargestellte perspektivische Ansicht auf ein elektrisch betriebenes Kraftfahrzeug mit Fahrzeugrahmen und einem Hilfsrahmen zum Aufsetzen und/oder Aufnehmen der Karosserie 10;
Figur 3a eine perspektivische Ansicht auf eine mögliche Lagerung und Aufnahme zumindest eines Sitzelementes des elektrisch betriebenen Fahrzeuges;
Figur 3b eine schematisch dargestellte Vorderansicht auf eine weitere Möglichkeit der Anordnung und Lagerung des zumindest einen Sitzelementes am Torsionsträger.

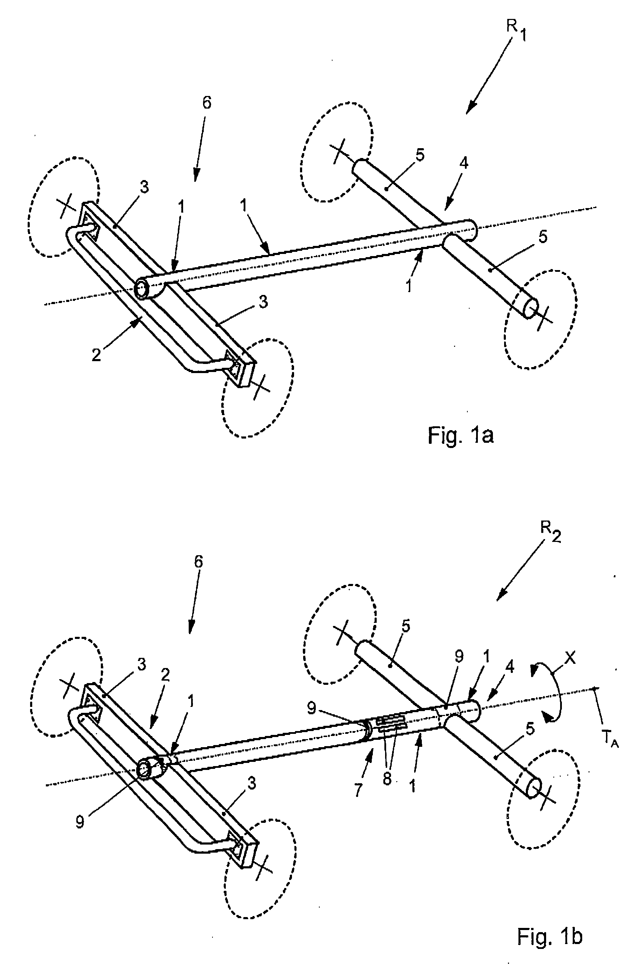

Gemäss Figur 1a weist ein elektrisch betriebenes Kraftfahrzeug R₁, insbesondere Personen- oder Kleintransportfahrzeug einen Torsionsträger 1 auf, an welchem in einem vorderen Bereich 2 eine starre Vorderachse 3 und in einem hinteren Bereich 4 eine starre Hinterachse 5 anschliesst. Die starre Vorderachse 3 sowie die starre Hinterachse 5 sind vorzugsweise fest mit dem Torsionsträger 1 verbunden, insbesondere fest verschweisst.

Querschnittlich können die starre Vorderachse 3 und/oder die starre Hinterachse 5 als offene oder geschlossene Profile, rechteckige Profile, rohrartige Profile, Rundrohre etc. ausgebildet sein. Hierauf sei die Erfindung nicht beschränkt. Gleiches gilt für den Torsionsträger 1, dieser ist bevorzugt als Rohr, zylindrisches Rohr ausgebildet, kann auch als Rechteckrohr ausgebildet sein. Auch soll daran gedacht sein, dass der Torsionsträger 1 als offener Träger, wie bspw. querschnittlich u-artig, t-artig od. dgl. ausgebildet sein kann. Hierauf sei die Erfindung nicht beschränkt.

Wichtig bei der vorliegenden Erfindung ist, dass ein Fahrzeugrahmen 6 gebildet ist, wobei zwischen der starren Vorderachse 3 und der starren Hinterachse 5 ein Torsionsträger 1 fest eingesetzt ist

Dabei hat sich bei der vorliegenden Erfindung als vorteilhaft erwiesen, um eine Bewegung der starren Hinterachse 5 um eine Torsionsträgerachse T_{A} in dargestellter Doppelpfeilrichtung x zuzulassen, dass ein Bereich 7 nahe der starren Hinterachse 5 des Torsionsträgers 1 geschwächt ist und mit zumindest einer Schwächung 8, insbesondere Ausnehmung, von wählbarer Grösse und Länge versehen ist.

Durch die entsprechende Schwächung 8 des Torsionsträgers 1 im Bereich 7 nahe der starren Hinterachse 5 lässt sich ein Torsionswiderstand des Torsionsträgers 1 reduzieren, was eine Bewegung der starren Hinterachse 5 um die Torsionsträgerachse T_{A} zulässt. Anstelle der Schwächung 8, insbesondere der Ausnehmung kann auch bspw. ein Verdrehelement 9, wie es in Figur 1b des Kraftfahrzeuges R₂ aufgezeigt ist, eingesetzt werden. Das Verdrehelement 9 lässt eine Bewegung der starren Hinterachse 5 in dargestellter Doppelpfeilrichtung X um die Torsionsträgerachse T_{A} ebenfalls zu, bevorzugt ist das Verdrehelement 9 auch nahe im Bereich 7 der starren Hinterachse 5 angeordnet. Das Verdrehelement 9 kann auch eine Verbindung des Torsionsträgers 1 mit der Vorder- und/oder Hinterachse 3, 5 bilden, d.h. die Vorder- und/oder Hinterachsen 3, 5 schliessen direkt an das Verdrehelement 9 an. Das Verdrehelement 9 kann bspw. als Spiral- oder Torsionsfederelement, Gummielement, elastomeres Federelement od. dgl. ausgebildet sein.

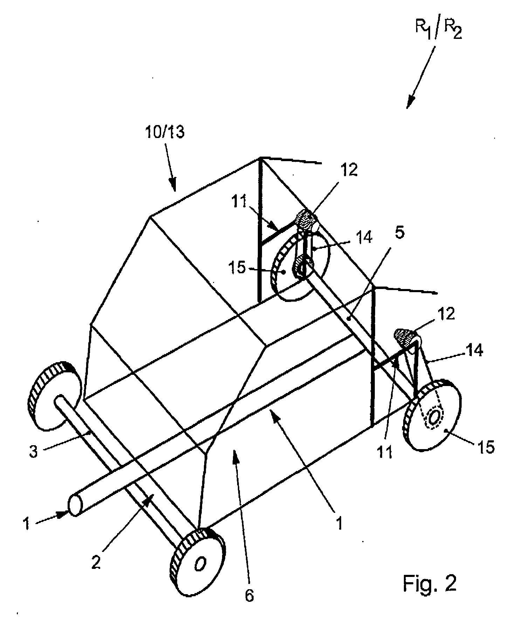

Auf den Fahrzeugrahmen 6, bestehend aus Torsionsträger 1 und starrer Vorder- und Hinterachse 3, 5 lässt sich, wie es in Figur 2 angedeutet ist, ein Hilfsrahmen 13 und/oder eine beliebige Karosserie 10 aufsetzen oder anbringen oder dient der Aufnahme einzelner Karosserieteile.

Eine weitere Besonderheit der vorliegenden Erfindung ist, dass vorzugsweise endseits der starren Hinterachse 5 jeweils beidseitig entsprechende Trägerelemente 11 anschliessen, an welche die Karosserie 10 befestigt werden kann. Die Trägerelemente 11 können plattenartig, gitterrohrartig, trägerartig ausgebildet sein und dienen der Aufnahme des elektrischen Antriebes 12, wie er hier nur angedeutet ist und der Aufnahme der Karosserie 10 bzw. dessen Hilfsrahmen 13 und ggfs. eines Sicherheitssystems bzw. Sicherheitsgurtes. Dabei kann ein Teil des Sicherheitssystems bzw. des Sicherheitsgurtes direkt am Torsionsträger 1 und der andere Teil am Trägerelement 11 befestigt sein. Bei Dreipunktgurten ist eine dritte Aufnahmemöglichkeit im Bereich des Hilfsrahmens 13 oder der Karosserie 10 selbst möglich.

Mit entsprechenden hier nur angedeuteten Riemenantrieben 14 lassen sich die Hinterräder 15 direkt jeweils einzeln über die einzelnen elektrischen Antriebe 12 ohne Differenzial direkt antreiben.

Eine weitere Besonderheit der vorliegenden Erfindung ist, dass in einem vorderen Bereich 2 des Fahrzeugrahmens 6 der Hilfsrahmen 13 und/oder die Karosserie 10 auf dem Torsionsträger 1 und/oder der starren Vorderachse 3 verdrehbar aufliegt oder dort verdrehbar festgelegt ist.

Die Karosserie 10 bzw. der Hilfsrahmen 13 sind lediglich fest direkt mit der starren Hinterachse 5, vorzugsweise direkt mit dem Trägerelementen 11 der starren Hinterachse 5 verbunden. Im vorderen Bereich 2 liegt die Karosserie 10 bzw. der Hilfsrahmen 13 verdrehbar lediglich dem Torsionsträger 1 und/oder der vorderen Vorderachse 3 verdrehbar auf.

Ferner ist von Vorteil bei der vorliegenden Erfindung, dass zumindest ein Sitzelement 16 über zumindest ein Federelement 17 federnd und gedämpft, direkt oder indirekt gegenüber dem Torsionsträger 1 gelagert ist. Das Federelement 17, welches zumindest ein Sitzelement 16 trägt kann als Torsionsfeder, Blattfeder, Spiralfeder, Luftfeder, Luftfedersystem, hydraulische Feder, hydraulische Federsysteme od. dgl. ausgebildet sein. Hierauf sei die Erfindung nicht beschränkt. Wichtig ist jedoch, dass das zumindest eine Sitzelement 16 gegenüber dem Torsionsträger 1 oder gegenüber der Karosserie 10 und/oder gegenüber dem Hilfsrahmen 13 federnd gelagert ist. Bevorzugt werden die Sitzelemente 16 federnd gegenüber dem Torsionsträger 1 direkt gelagert.

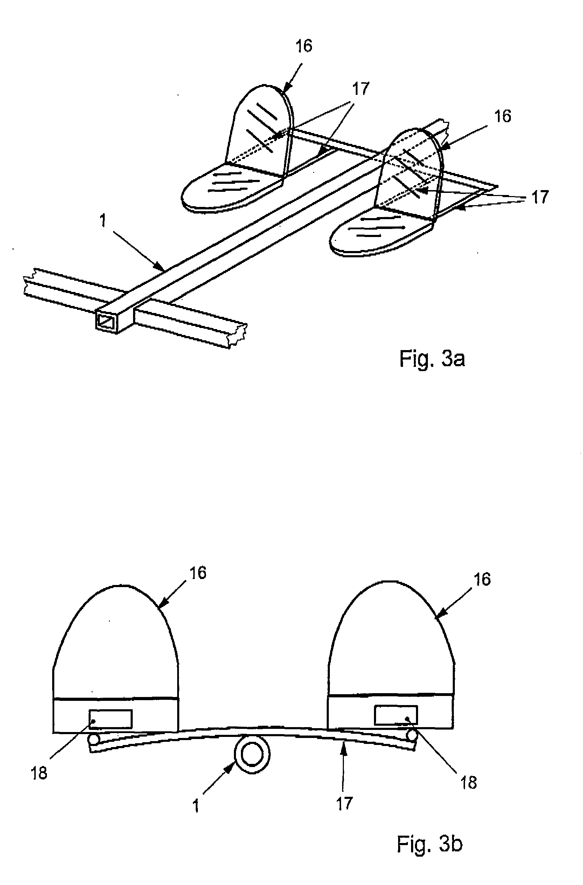

Die Sitzelemente 16 können auch zumindest eine Energiequelle 18 wie sie in Figur 3b angedeutet ist, aufnehmen.

Auf diese Weise sind die Energiequellen 16 zum Betrieb des Kraftfahrzeuges R₁/R₂, insbesondere zur Speisung des elektrischen Antriebes 12 federnd gelagert, so dass insgesamt der Anteil der ungefederten Massen des Kraftfahrzeuges R₁, R₂ reduzierbar ist.

### Bezugszeichenliste

| | | | | | |
|---|---|---|---|---|---|
| 1 | Torsionsträger | 34 | | 67 | |
| 2 | vorderer Bereich | 35 | | 68 | |
| 3 | starre Vorderachse | 36 | | 69 | |
| 4 | hinterer Bereich | 37 | | 70 | |
| 5 | starre Hinterachse | 38 | | 71 | |
| 6 | Fahrzeugrahmen | 39 | | 72 | |
| 7 | Bereich | 40 | | 73 | |
| 8 | Schwächung | 41 | | 74 | |
| 9 | Verdrehelement | 42 | | 75 | |
| 10 | Karosserie | 43 | | 76 | |
| 11 | Trägerelement | 44 | | 77 | |
| 12 | elektrischer Antrieb | 45 | | 78 | |
| 13 | Hilfsrahmen | 46 | | 79 | |
| 14 | Riemenantrieb | 47 | | | |
| 15 | Hinterrad | 48 | | | |
| 16 | Sitzelement | 49 | | | |
| 17 | Federelement | 50 | | | |
| 18 | Energiequelle | 51 | | | |
| 19 | | 52 | | | |
| 20 | | 53 | | R₁ | Kraftfahrzeug |
| 21 | | 54 | | R₂ | Kraftfahrzeug |
| 22 | | 55 | | | |
| 23 | | 56 | | | |
| 24 | | 57 | | | |
| 25 | | 58 | | | |
| 26 | | 59 | | T_{A} | Torsionsträgerachse |
| 27 | | 60 | | | |
| 28 | | 61 | | | |
| 29 | | 62 | | X | Doppelpfeilrichtung |
| 30 | | 63 | | | |
| 31 | | 64 | | | |
| 32 | | 65 | | | |
| 33 | | 66 | | | |

## Patentansprüche

1. Elektrisch betriebenes Kraftfahrzeug, insbesondere Personen- oder Kleintransportfahrzeug mit zumindest einem elektrischen Antrieb (12), einem Fahrzeugrahmen (6) (Chassis) und einer auf den Fahrzeugrahmen (6) aufsetzbaren Karosserie (10),
**dadurch gekennzeichnet,**
**dass** der Fahrzeugrahmen (6) aus einem Torsionsträger (1) gebildet ist, an welchen einends eine starre Vorderachse (3) und andernends eine starre Hinterachse (5) anschliesst.

2. Elektrisch betriebenes Kraftfahrzeug nach Anspruch 1, **dadurch gekennzeichnet, dass** der Torsionsträger (1), als passives Element und/oder die starre Vorder- und/oder Hinterachse (3, 5) mit zumindest einer Schwächung (8), insbesondere Ausnehmung od. dgl., versehen ist, um einen wählbaren Torsionswiderstand des Torsionsträgers (1) einzustellen.

3. Elektrisch betriebenes Kraftfahrzeug nach Anspruch 1 oder 2, **dadurch gekennzeichnet, dass** der Torsionsträger (1) querschnittlich offen oder als geschlossenes Profil, insbesondere rohrartiges Element gebildet ist, wobei endseits eine starre Vorderachse (3) und eine starre Hinterachse (5) fest mit dem Torsionsträger (1) verbunden, insbesondere fest verschweisst sind.

4. Elektrisch betriebenes Kraftfahrzeug nach wenigstens einem der Ansprüche 1 bis 3, **dadurch gekennzeichnet, dass** der Torsionsträger (1) zwei- oder mehrteilig ausgebildet ist, und zur Gewährung von Torsion um eine Torsionsträgerachse (T_{A}) zumindest ein Verdrehelement (9) dazwischen eingesetzt ist.

5. Elektrisch betriebenes Kraftfahrzeug nach wenigstens einem der Ansprüche 2 bis 4, **dadurch gekennzeichnet, dass** die Schwächung (8), insbesondere die Ausnehmung oder das Verdrehelement (9) nahe der starren Hinterachsen (5) im Torsionsträger (1) vorgesehen sind, wobei ggfs. die Vorder- und/oder Hinterachsen (3, 5) direkt an das Verdrehelement (9) anschliessbar sind.

6. Elektrisch betriebenes Kraftfahrzeug nach wenigstens einem der Ansprüche 2 bis 5, **dadurch gekennzeichnet, dass** die Schwächung (8) im Torsionsträger (1) nahe in einem hinteren Bereich (4) der starren Hinterachse (5) als Längsschlitze von wählbarer Breite, Länge und Anzahl vorgesehen sind.

7. Elektrisch betriebenes Kraftfahrzeug nach wenigstens einem der Ansprüche 1 bis 6, **dadurch gekennzeichnet, dass** einends oder beiderends an der starren Hinterachse (5) zumindest ein Trägerelement (11) anschliesst.

8. Elektrisch betriebenes Kraftfahrzeug nach wenigstens einem der Ansprüche 1 bis 7, **dadurch gekennzeichnet, dass** die Karosserie (10) fest mit der starren Hinterachse (5) verbunden ist und nahe in einem vorderen Bereich (2) der starren Vorderachse (3) verdrehbar und ggfs. punktuell bzw. mit dem Torsionsträger (1) und/oder der Vorderachse (3) gelagert ist.

9. Elektrisch betriebenes Kraftfahrzeug nach wenigstens einem der Ansprüche 7 oder 8, **dadurch gekennzeichnet, dass** die Karosserie (10) nicht selbsttragend ausgebildet ist und fest mit der Hinterachse (5) oder dessen Trägerelement (11) fest verbunden ist und in einem vorderen Bereich (2), nahe der starren Vorderachse (3) und/oder dem vorderen Bereich (2) des Torsionsträgers (1) verdrehbar festgelegt ist.

10. Elektrisch betriebenes Kraftfahrzeug nach wenigstens einem der Ansprüche 7 bis 9, **dadurch gekennzeichnet, dass** zum Tragen von zumindest einem Sitzelement (16) und/oder Unterbodengruppen ein Hilfsrahmen (13) dem Torsionsträger (1) und/oder der starren Vorder- und/oder Hinterachse (3, 5) aufliegt.

11. Elektrisch betriebenes Kraftfahrzeug nach wenigstens einem der Ansprüche 7 bis 10, **dadurch gekennzeichnet, dass** das Trägerelement (11) der Aufnahme zumindest eines elektrisch betriebenen Antriebes (12), insbesondere eines Elektromotors dient, welcher über Riemen, Zahnriemen direkt, oder indirekt ggfs. mit dazwischen geschaltetem Getriebe ein Hinterrad (15) antreibt.

12. Elektrisch betriebenes Kraftfahrzeug nach wenigstens einem der Ansprüche 7 bis 11, **dadurch gekennzeichnet, dass** das Trägerelement (11) als Halteplatte, Rahmenstruktur, Träger, od. dgl. endseits mit der starren Hinterachse (5) nahe im Bereich der Räder fest- oder wiederlösbar verbunden und ggfs. in etwa parallel zum Torsionsträger (1) ausgerichtet ist.

13. Elektrisch betriebenes Kraftfahrzeug nach wenigstens einem der Ansprüche 1 bis 12, **dadurch gekennzeichnet, dass** zumindest ein Sitzelement (16) direkt oder indirekt gegenüber dem Torsionsträger (1) federnd und dämpfend oder nur federnd gelagert ist.

14. Elektrisch betriebenes Kraftfahrzeug nach Anspruch 13, **dadurch gekennzeichnet, dass** das zumindest eine Sitzelement (16) über Federelemente (17), insbesondere Querblattfedern gegenüber dem Torsionsträger (1) federnd gelagert sind.

15. Elektrisch betriebenes Kraftfahrzeug nach Anspruch 13 oder 14, **dadurch gekennzeichnet, dass** das zumindest eine Sitzelement (16) federnd und dämpfend mit dem Torsionsträger (1) direkt oder indirekt in Verbindung steht, wobei das zumindest eine Sitzelement ggfs. über einen Hilfsrahmen (13) mit dem Torsionsträger (1) in Verbindung steht.

16. Elektrisch betriebenes Kraftfahrzeug nach wenigstens einem der Ansprüche 1 bis 15, **dadurch gekennzeichnet, dass** zumindest eine Energiequelle (18) zur Speisung des elektrischen Antriebes (12) federnd und dämpfend, oder nur dämpfend direkt oder indirekt gegenüber dem Torsionsträger (1) gelagert ist.

17. Elektrisch betriebenes Kraftfahrzeug nach wenigstens einem der Ansprüche 1 bis 16, **dadurch gekennzeichnet, dass** zumindest eine Energiequelle (18) zur Speisung des elektrischen Antriebes (12) in zumindest einem Sitzelement (16) integriert oder dort angeordnet ist.

18. Elektrisch betriebenes Kraftfahrzeug nach wenigstens einem der Ansprüche 7 bis 17, **dadurch gekennzeichnet, dass** ein Sicherheitssystem, insbesondere ein Sicherheitsgurt am Torsionsträger (1) und/oder am Trägerelement (11) befestigt ist.
